# EUROPEAN PATENT APPLICATION

(11) **EP 4 749 457 A1**
(43) Date of publication of application: **27.05.2026**
(21) Application number: 25216775.4
(22) Date of filing: 18.11.2025
(51) Int. Cl.: G06F 9/50

(54) **PREVENTING SERVICE OUTAGES CAUSED BY SERVICE CAPACITY CONSTRAINTS**

(30) Priority: 25.11.2024 US 202418959001
(71) Applicant: Microsoft Technology Licensing, LLC, Redmond, WA 98052 (US)
(72) Inventor: SUTHAR AKA GAJJAR, MEERA ALPESHKUMAR, Redmond, 98052 (US); NARASIMHAN, ARVIND, Redmond, 98052 (US); AGHAEI KHOUZANI, HODA, Redmond, 98052 (US); GANGAL, ASHISH, Redmond, 98052 (US); KUMAR, RAJIVE, Redmond, 98052 (US); KWOK, PUI YAN, Redmond, 98052 (US); XU, ZHANGWEI, Redmond, 98052 (US); AGRAWAL, LAXMIKANT, Redmond, 98052 (US)
(74) Representative: CMS Cameron McKenna Nabarro Olswang LLP

(57) **Abstract**

A system implements techniques for using traffic volume associated with a service in order to proactively manage the capacity of a resource that supports the service. More specifically, the traffic volume is used as an indicator to determine, or project, a change in capacity that may be needed to avoid the under-provisioning of the resource. Alternatively, the traffic volume is used as an indicator to determine, or project, a change in capacity that may be preferred by a tenant that operates the service to avoid the over-provisioning of the resource.

## Description

### BACKGROUND

A cloud computing environment such as MICROSOFT AZURE, AMAZON WEB SERVICES, GOOGLE CLOUD, etc. is configured to provide network-based infrastructure and other resources for use by various tenants. A tenant may be a customer, a business, an organization, a client, an individual user, and so forth. An operator of a cloud computing environment configures and offers resources to support and/or enable the execution of a tenant's service (e.g., an application) within the cloud computing environment.

Services can experience disruptions due to a lack of resource capacity as more and more people continue to use the services hosted within the cloud computing environment. In many cases, a disruption may even cause a service outage which leads to an increase in dissatisfaction for users of the service. The lack of resource capacity may be referred to as the "under-provisioning" of a resource. Alternatively, the utilization of services may unexpectedly drop for various reasons and this can lead to the "over-provisioning" of a resource. The over-provisioning of a resource also presents problems for the tenant as it translates to unnecessary costs.

Due to the increasing amount of fluctuation in utilization of services, it is difficult for tenants to manage resource capacity. Stated alternatively, many tenants are unable to accurately determine what the resource capacity should be for their services. The tenants do not want a resource over-provisioned because this can lead to unnecessary costs. Yet the tenants do not want the resource under-provisioned because this can lead to a service disruption or even a service outage. It is with respect to these and other considerations that the disclosure made herein is presented.

### SUMMARY

The system described herein implements techniques for using traffic volume associated with a service in order to proactively manage the capacity of a resource that supports the service. More specifically, the traffic volume is used as an indicator to determine, or project, a change in capacity that may be needed to avoid the under-provisioning of the resource. Alternatively, the traffic volume is used as an indicator to determine, or project, a change in capacity that may be preferred by a tenant that operates the service to avoid the over-provisioning of the resource.

The service executes in a cloud computing environment, and thus, the resource is one that is provisioned by an operator of the cloud computing environment to support the execution of the service. The techniques can be implemented with respect to different types of resources that support the service executing in the cloud computing environment. The types of resources described herein include a central processing unit-type resource, a storage-type resource, and a networking-type resource. However, the cloud computing environment can provide other types of resources as well (e.g., a graphical processing unit-type resource). Accordingly, the techniques described herein can be implemented with respect to any type of resource provided by a cloud computing environment in order to support services (e.g., tenant services) executing in the cloud computing environment.

The "capacity" of a resource is a total amount of the resource that is allocated to and/or configured for use by the service. Consequently, different types of resources are associated with respective measurable units to determine the total amounts of the resources that are allocated to and/or configured for use by the service. The "capacity utilization" of a resource is a percentage of the capacity that is currently being used, or projected to be used, by the service. Accordingly, the capacity utilization is reflected based on an amount of the resource that is currently in use, or is projected to be in use, compared to the total amount of the resource that is or will be allocated to and/or configured for use by the service. The "available capacity" is a percentage of the capacity that is currently not being used, or that is projected to not be used, by the service. As an example, if the capacity of a resource is ten measurable units and the service is using eight measurable units, then the capacity utilization is eighty percent (80%) and the available capacity is two measurable units or twenty percent (20%).

Generally, tenants and/or operators of cloud computing environments manage capacity in a "reactive" manner. More specifically, if a capacity utilization threshold for a resource is satisfied (e.g., 80% of central processing unit capacity is exceeded), then an auto-scaling process is implemented where additional amounts of the resource is allocated to increase the capacity. However, due to the reactive nature, the auto-scaling process may not be implemented in time to avoid service instability (e.g., a disruption, an outage). This is particularly evident when utilization of the service increases dramatically (e.g., the utilization of the service spikes).

The system described herein continuously monitors a traffic volume metric to manage capacity in a "proactive" manner, thereby avoiding the shortcomings of the auto-scaling process. That is, the system described herein is configured to access a training dataset and use the training dataset to generate a service-specific machine learning model. The training dataset includes first values associated with the traffic volume metric for a service executing in the cloud computing environment. In one example, the traffic volume metric comprises a total number of requests received by the service per a defined time unit (e.g., one minute, five minutes, ten minutes, one hour). The training dataset further includes second values associated with a capacity metric for a resource supporting the service. In one example, the capacity metric comprises the capacity utilization reflected as a percentage, as discussed above.

The service-specific machine learning model, as generated by the disclosed system, is configured to project changes in capacity utilization based on changes in traffic volume. More specifically, the service-specific machine learning model learns correlations (e.g., patterns) that capture the effects that different changes in the traffic volume metric has on capacity utilization at a later time. To this end, given current values for the traffic volume metric as inputs, the service-specific machine learning model is able to project, as an output, a change in capacity utilization over a future time period (e.g., minutes, hours, days, weeks, or even months). Stated alternatively, the service-specific machine learning model is able to project the capacity utilization at a given time in the future time period, provided the capacity remains constant. The service-specific machine learning model can be any type of predictive model that can be applied to the features extracted from the training dataset. Accordingly, the service-specific machine learning model can use any one of neural networks (e.g., convolutional neural networks, recurrent neural networks such as Long Short-Term Memory, etc.), Naive Bayes, k-nearest neighbor algorithm, majority classifier, support vector machines, random forests, boosted trees, Classification and Regression Trees (CART), and so on.

Accordingly, the system is configured to access current values associated with the traffic volume metric for the service and apply the service-specific machine learning model to the current values associated with the traffic volume metric for the service. The term "current" in this context reflects a sliding recent time window of values (e.g., the most recent minute, the most recent thirty minutes, the most recent hour, the most recent day, the most recent week, the most recent month). If the current values associated with the traffic volume metric reflect a change in traffic volume for the service, then the service-specific machine learning model projects (e.g., outputs) a corresponding change in capacity utilization of the resource supporting the service over a future time period.

Next, the system compares the projected change in capacity utilization of the resource over a future time period to a capacity management policy. The system determines whether the capacity management policy is to be violated based on the projected change in capacity utilization. The capacity management policy defines an under-provisioning threshold associated with capacity utilization (e.g., 80% capacity utilization). Thus, if the projected change in capacity utilization reflects that the under-provisioning threshold is to be satisfied (e.g., capacity utilization is to increase and exceed 80% of the capacity), then the capacity management policy is determined to be violated. Additionally or alternatively, the capacity management policy defines an over-provisioning threshold associated with capacity utilization (e.g., 50% capacity utilization). Thus, if the projected change in capacity utilization reflects that the over-provisioning threshold is to be satisfied (e.g., capacity utilization is to decrease and fall below 50% of the total capacity), then the capacity management policy is determined to be violated.

If the capacity management policy is determined to be violated, the system provides a notification to a tenant that operates the service. The notification indicates that the capacity management policy is to be violated based on the projected change in capacity utilization. Moreover, the notification can indicate an expected time when the capacity management policy is to be violated. Consequently, the tenant can act to review and manage the capacity to ensure there is no under-provisioning or over-provisioning of the resource. For instance, the tenant can request that additional resources be provisioned to the service (e.g., allocated to the service) or that existing resources be removed from the service (e.g., deallocated from the service) in a proactive manner (e.g., at a time before the capacity management policy is violated). In addition, or as an alternative, to providing the notification, the system can automatically provision (e.g., allocate) additional resources to the service or remove (e.g., deallocate) existing resources from the service in a proactive manner (e.g., at a time before the capacity management policy is violated). The automatic provisioning or removal of resources can be based on preauthorization from the tenant that operates the service.

**In** various examples, the capacity management policy defines a target capacity utilization (e.g., 65% target utilization) for the resource. The target capacity utilization may be set to strike an ideal balance with respect to avoiding both the under-provisioning and the over-provisioning of the resource. Thus, the system is further configured to use the projected change in capacity utilization to determine and/or recommend an amount of the resource to provision or remove at a given time in order to achieve the target capacity utilization.

**In** one example, the capacity management policy is defined by the tenant operating the service. That is, the tenant can define each of the under-provisioning threshold, the over-provisioning threshold, and the target capacity utilization. In another example, the capacity management policy is a default capacity management policy defined by an operator of the cloud computing environment based on a priority level associated with the service. Consequently, the operator of the cloud computing environment can define each of the under-provisioning threshold, the over-provisioning threshold, and the target capacity utilization.

This Summary is provided to introduce a selection of concepts in a simplified form that are further described blow in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF DRAWINGS

The Detailed Description is described with reference to the accompanying figures. In the description detailed herein, references are made to the accompanying drawings that form a part hereof, and that show, by way of illustration, specific embodiments or examples. The drawings herein are not drawn to scale. Like numerals represent like elements throughout the several figures.
FIG. 1 illustrates an example environment in which a system uses traffic volume associated with a service in order to proactively manage the capacity of a resource that supports the service.
FIG. 2 illustrates an example capacity management policy used to determine whether to implement a capacity management action.
FIG. 3 illustrates how machine learning can be used to correlate changes in a traffic volume metric to projected changes in a capacity metric.
FIG. 4 is a flowchart depicting an example process for using traffic volume associated with a service in order to proactively manage the capacity of a resource that supports the service.
FIG. 5 is an example computing system in accordance with the present disclosure.

### DETAILED DESCRIPTION

The system described herein implements techniques for using traffic volume associated with a service in order to proactively manage the capacity of a resource that supports the service. More specifically, the traffic volume is used as an indicator to determine, or project, a change in capacity that may be needed to avoid the under-provisioning of the resource. Alternatively, the traffic volume is used as an indicator to determine, or project, a change in capacity that may be preferred by a tenant that operates the service to avoid the over-provisioning of the resource.

Generally, tenants and/or operators of cloud computing environments manage capacity in a "reactive" manner. More specifically, if a capacity utilization threshold for a resource is satisfied (e.g., 80% of central processing unit capacity is exceeded), then an auto-scaling process is implemented where additional amounts of the resource is allocated to increase the capacity. However, due to the reactive nature, the auto-scaling process may not be implemented in time to avoid service instability (e.g., a disruption, an outage). This is particularly evident when utilization of the service is volatile (e.g., utilization of the service increases dramatically or spikes).

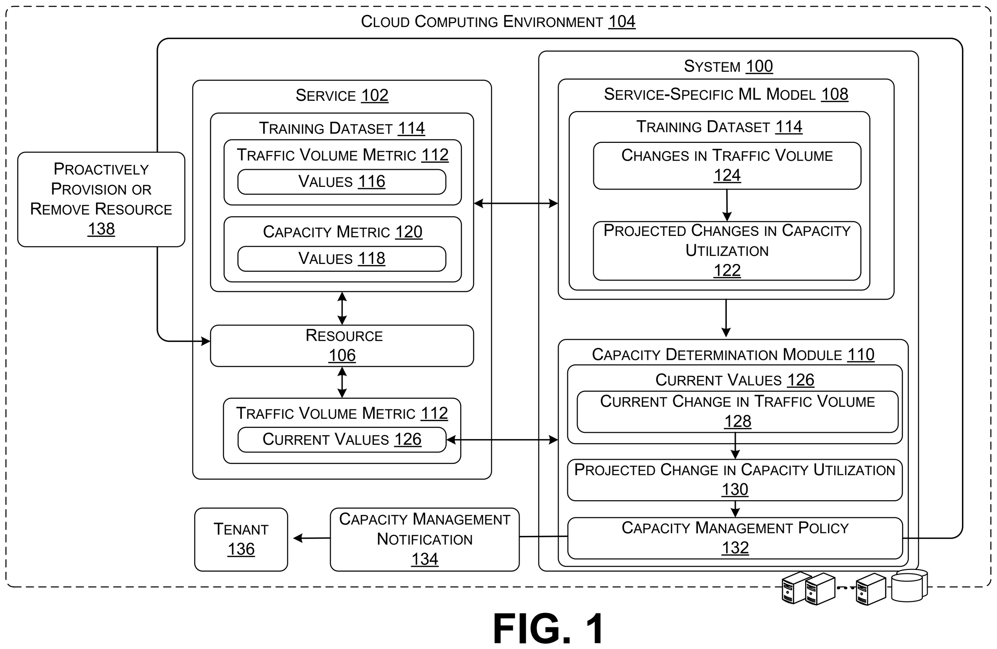

FIG. 1 illustrates an example environment in which a system 100 uses traffic volume associated with a service 102 executing in a cloud computing environment 104 in order to proactively manage the capacity of a resource 106 that supports the service 102. The cloud computing environment 104 includes devices that are part of one or more cloud platforms, one or more edge networks, and/or one or more on-premises networks. The system 100 includes a service-specific machine learning model 108 and a capacity determination module 110. The functionality described herein in association with the illustrated models/modules can be performed by a fewer number of models/modules or a larger number of models/modules on one device (e.g., server) in the system 100 or spread across multiple devices in the system 100.

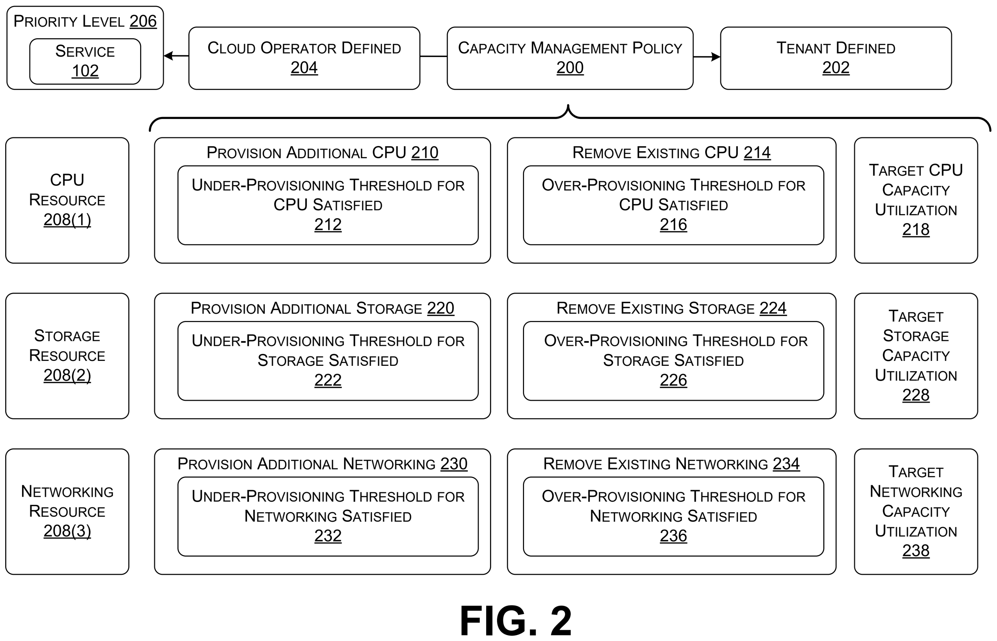

As the service 102 executes in the cloud computing environment 104, the resource 106 is one that is provisioned by an operator of the cloud computing environment 104 to support the execution of the service 102. The techniques can be implemented with respect to different types of resources 106 that support the service 102 executing in the cloud computing environment 104. The types of resources 106 described below with respect to FIG. 2 include a central processing unit-type resource, a storage-type resource, and a networking-type resource. However, the cloud computing environment 104 can provide other types of resources 106 as well (e.g., a graphical processing unit-type resource). Accordingly, the techniques described herein can be implemented with respect to any type of resource 106 provided by a cloud computing environment 104 in order to support services 102 (e.g., tenant services) executing in the cloud computing environment 104.

As described above, the "capacity" of a resource is a total amount of the resource 106 that is allocated to and/or configured for use by the service 102. Consequently, different types of resources 106 are associated with respective measurable units to determine the total amounts of the resources 106 that are allocated to and/or configured for use by the service 102. The "capacity utilization" of a resource 106 is a percentage of the capacity that is currently being used, or projected to be used, by the service 102. Accordingly, the capacity utilization is reflected based on an amount of the resource 106 that is currently in use, or is projected to be in use, compared to the total amount of the resource 106 that is or will be allocated to and/or configured for use by the service 102. The "available capacity" is a percentage of the capacity that is currently not being used, or that is projected to not be used, by the service 102. As an example, if the capacity of a resource 106 is ten measurable units and the service 102 is using eight measurable units, then the capacity utilization is eighty percent (80%) and the available capacity is two measurable units or twenty percent (20%).

The system 100 continuously monitors a traffic volume metric 112 to manage capacity in a "proactive" manner, thereby avoiding the shortcomings of the auto-scaling process. More specifically, the system 100 is configured to access a training dataset 114 and use the training dataset 114 to generate the service-specific machine learning model 108. The training dataset 114 includes first values 116 associated with the traffic volume metric 112 for the service 102. In one example, the traffic volume metric 112 comprises a total number of requests received by the service 102 per a defined time unit (e.g., one minute, five minutes, ten minutes, one hour). The training dataset 114 further includes second values 118 associated with a capacity metric 120 for the resource 106 supporting the service 102. In one example, the capacity metric 120 comprises the capacity utilization reflected as a percentage, as discussed above.

The service-specific machine learning model 108, as generated by the system 100, is trained to project changes in capacity utilization 122 based on changes in traffic volume 124. More specifically, the service-specific machine learning model 108 learns correlations (e.g., patterns) that capture the effects that different changes in the traffic volume metric 112 has on capacity utilization at a later time. To this end, given current values for the traffic volume metric 112 as inputs, the service-specific machine learning model 108 is able to project, as an output, a change in capacity utilization 122 over a future time period (e.g., minutes, hours, days, weeks, or even months). Stated alternatively, the service-specific machine learning model 108 is able to project the capacity utilization at a given time in the future time period, provided the capacity remains constant. The service-specific machine learning model 108 can be any type of predictive model that can be applied to the features extracted from the training dataset 114. Accordingly, the service-specific machine learning model 108 can use any one of neural networks (e.g., convolutional neural networks, recurrent neural networks such as Long Short-Term Memory, etc.), Naive Bayes, k-nearest neighbor algorithm, majority classifier, support vector machines, random forests, boosted trees, Classification and Regression Trees (CART), and so on.

The capacity determination module 110 is configured to access current values 126 associated with the traffic volume metric 112 for the service 102 and apply the service-specific machine learning model 108 to the current values. The term "current" in this context reflects a sliding recent time window of values (e.g., the most recent minute, the most recent thirty minutes, the most recent hour, the most recent day, the most recent week, the most recent month) that is sufficient to reflect meaningful changes in traffic volume. A size of sliding recent time window may depend on the type of service 102.

If the current values 126 associated with the traffic volume metric 112 reflect a current change in traffic volume 128 for the service, then the service-specific machine learning model 108 projects (e.g., outputs) a corresponding change in capacity utilization 130 of the resource 106 supporting the service 102 over a future time period. Next, the capacity determination module 110 compares the projected change in capacity utilization 130 of the resource 106 over a future time period to a capacity management policy 132. The capacity determination module 110 determines whether the capacity management policy 132 is to be violated based on the projected change in capacity utilization 130.

As further discussed below with respect to FIG. 2, the capacity management policy 132 defines an under-provisioning threshold associated with capacity utilization (e.g., 80% capacity utilization). Thus, if the projected change in capacity utilization 130 reflects that the under-provisioning threshold is to be satisfied (e.g., capacity utilization is to increase and exceed 80% of the capacity), then the capacity management policy 132 is determined to be violated. Additionally or alternatively, the capacity management policy 132 defines an over-provisioning threshold associated with capacity utilization (e.g., 50% capacity utilization). Thus, if the projected change in capacity utilization 130 reflects that the over-provisioning threshold is to be satisfied (e.g., capacity utilization is to decrease and fall below 50% of the total capacity), then the capacity management policy 132 is determined to be violated.

If the capacity management policy 132 is determined to be violated, the capacity determination module 110 provides a capacity management notification 134 to a tenant 136 that operates the service 102. The notification 134 indicates that the capacity management policy 132 is to be violated based on the projected change in capacity utilization 130. Moreover, the notification 134 can indicate an expected time when the capacity management policy 132 is to be violated. Consequently, the tenant 136 can act to review and manage the capacity to ensure there is no under-provisioning or over-provisioning of the resource 106. For instance, the tenant 136 can request that additional resources be provisioned to the service 102 (e.g., allocated to the service 102) or that existing resources be removed from the service 102 (e.g., deallocated from the service 102) in a proactive manner (e.g., at a time before the capacity management policy 132 is violated).

In addition, or as an alternative, to providing the notification 134, the capacity determination module 110 can automatically provision (e.g., allocate) additional resources to the service 102 or remove (e.g., deallocate) existing resources from the service 102 in a proactive manner (e.g., at a time before the capacity management policy is violated), as referenced by 138. The automatic provisioning or removal of resources can be based on preauthorization from the tenant 136 that operates the service 102.

FIG. 2 illustrates an example capacity management policy 200 (e.g., capacity management policy 132) used to determine whether to implement a capacity management action (e.g., the providing of the notification 134, the proactive provisioning or removal of resources 138). In one example, the capacity management policy 200 is defined by the tenant 136 operating the service 102, and thus, is referred to as a tenant defined 202 capacity management policy 200. That is, the tenant 136 can define each of the under-provisioning threshold, the over-provisioning threshold, and the target capacity utilization, as further discussed herein. In another example, the capacity management policy 200 is a default capacity management policy defined by an operator of the cloud computing environment 104, and thus, is referred to as a cloud operator defined 204 capacity management policy 200. Consequently, the operator of the cloud computing environment 104 can define each of the under-provisioning threshold, the over-provisioning threshold, and the target capacity utilization.

The operator of the cloud computing environment 104 may generate different capacity management policies based on a defined priority levels. Accordingly, the service 102 can be assigned to a priority level 206 based on a type of the service 102. In one example, types of service that require immediate or real-time responses for sufficient user/customer satisfaction (e.g., a transaction processing service, a streaming service, an online shopping service, a social media service) may have a higher priority level than types of services that do not require immediate or real-time responses for sufficient user/customer satisfaction (e.g., a data backup service, a software update service). Higher priority levels may correspond to lower under-provisioning thresholds (e.g., 70% as opposed to 80%) and lower over-provisioning thresholds (e.g., 40% as opposed to 50%) to ensure robustness and reliability.

As shown in FIG. 2, a service 102 may be supported by a central processing unit (CPU) resource 208(1), a storage resource 208(2), and a networking resource 208(3). The capacity management policy 200 defines the under-provisioning threshold, the over-provisioning threshold, and the target capacity utilization for each of the different types of resources 208(1-3).

For example, the capacity management policy 200 indicates that additional CPU is to be provisioned 210 if the projected change in capacity utilization 130 indicates that an under-provisioning threshold for CPU 212 (e.g., 80%) is satisfied (e.g., CPU capacity utilization is projected to increase and exceed the 80% under-provisioning threshold for CPU). The capacity management policy 200 further indicates that existing CPU is to be removed 214 if the projected change in capacity utilization 130 indicates that an over-provisioning threshold for CPU 216 (e.g., 50%) is satisfied (e.g., CPU capacity utilization is projected to decrease and fall below the 50% over-provisioning threshold for CPU). Furthermore, in various examples, the capacity management policy 200 defines a target CPU capacity utilization 218 (e.g., 65% target utilization) for the CPU resource 208(1). The target CPU capacity utilization 218 is defined to strike an ideal balance with respect to avoiding both the under-provisioning and the over-provisioning of the CPU resource 208(1). Thus, the capacity determination module 110 is further configured to use the projected change in capacity utilization 130 to determine and/or recommend an amount of the CPU resource 208(1) to provision or remove at a given time in order to achieve the target CPU capacity utilization 218.

In another example, the capacity management policy 200 indicates that additional storage is to be provisioned 220 if the projected change in capacity utilization 130 indicates that an under-provisioning threshold for storage 222 (e.g., 75%) is satisfied (e.g., storage capacity utilization is projected to increase and exceed the 75% under-provisioning threshold for storage). The capacity management policy 200 further indicates that existing storage is to be removed 224 if the projected change in capacity utilization 130 indicates that an over-provisioning threshold for storage 226 (e.g., 55%) is satisfied (e.g., storage capacity utilization is projected to decrease and fall below the 55% over-provisioning threshold for storage). Furthermore, in various examples, the capacity management policy 200 defines a target storage capacity utilization 228 (e.g., 65% target utilization) for the storage resource 208(2). The target storage capacity utilization 228 is defined to strike an ideal balance with respect to avoiding both the under-provisioning and the over-provisioning of the storage resource 208(2). Thus, the capacity determination module 110 is further configured to use the projected change in capacity utilization 130 to determine and/or recommend an amount of the storage resource 208(2) to provision or remove at a given time in order to achieve the target storage capacity utilization 228.

In a final example, the capacity management policy 200 indicates that additional networking is to be provisioned 230 if the projected change in capacity utilization 130 indicates that an under-provisioning threshold for networking 232 (e.g., 90%) is satisfied (e.g., networking capacity utilization is projected to increase and exceed the 90% under-provisioning threshold for networking). The capacity management policy 200 further indicates that existing networking is to be removed 234 if the projected change in capacity utilization 130 indicates that an over-provisioning threshold for networking 236 (e.g., 70%) is satisfied (e.g., networking capacity utilization is projected to decrease and fall below the 70% over-provisioning threshold for networking). Furthermore, in various examples, the capacity management policy 200 defines a target networking capacity utilization 238 (e.g., 80% target utilization) for the networking resource 208(3). The target networking capacity utilization 238 is defined to strike an ideal balance with respect to avoiding both the under-provisioning and the over-provisioning of the networking resource 208(3). Thus, the capacity determination module 110 is further configured to use the projected change in capacity utilization 130 to determine and/or recommend an amount of the networking resource 208(3 to provision or remove at a given time in order to achieve the target networking capacity utilization 238.

In various examples, the system can implement capacity management separately for different geographic regions defined by an operator of the cloud computing environment 104. The geographic regions can be smaller (e.g., cities, counties, states/provinces) or larger (e.g., parts of countries, continents). Consequently, the training dataset 114, the service-specific machine learning model 108, the current values 126, and the capacity management policy 132 (e.g., capacity management policy 200) are specific to a geographic region.

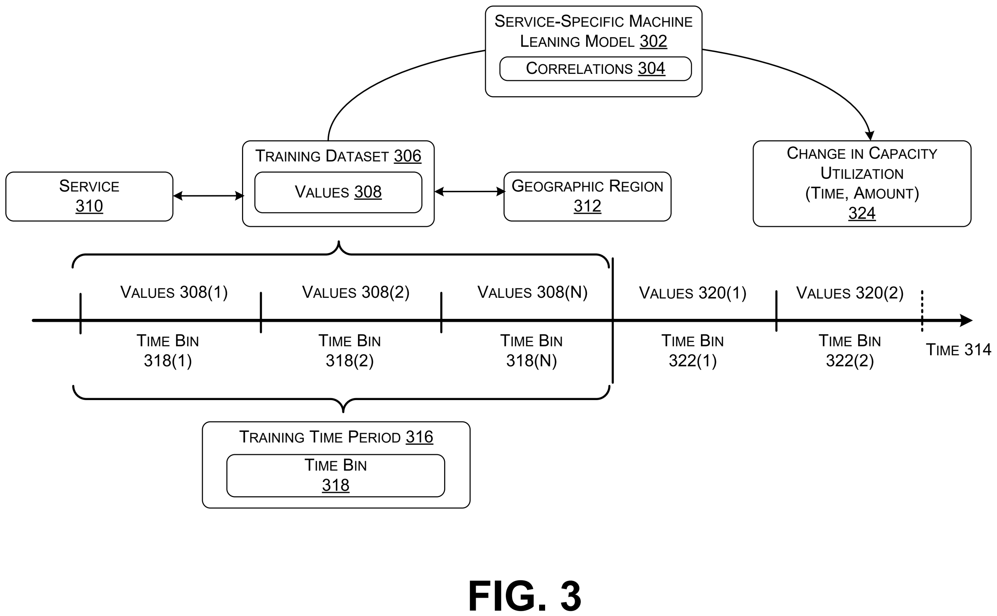

FIG. 3 illustrates how machine learning can be used to correlate changes in a traffic volume metric to projected changes in a capacity metric. More specifically, the service-specific machine learning model 302 (e.g., service-specific machine learning model 108) is configured to learn correlations 304 between changes in traffic volume and changes in capacity based on a training dataset 306 (e.g., training dataset 114) that includes values 308. As described above, the training dataset 306 is specific to a service 310 (e.g., service 102). Moreover, the training dataset 306 can be specific to a particular geographic region 312 defined by an operator of the cloud computing environment 104.a

As shown, FIG. 3 includes a time axis 314. A training time period 316 is divided into a time bin 318 of a defined length (e.g., a one minute time bin, a ten minute time bin, a one hour time bin, a one day time bin, a week time bin, a month time bin). The time bin 318 of a defined length is represented by time bins 318(1), time bin 318(2), and time bin 318(N) on the time axis 314. Thus, three time bins are shown for ease of discussion, i.e., N in this example equals three. However, the number N of defined time bins in the training time period 316 is much larger (e.g., hundreds or even thousands of defined time bins). In one example, the training time period 316 is a sliding predefined recent time window (e.g., the most recent day, the most recent week, the most recent month, the most recent year).

Each time bin 318(1-N) is configured to produce values 308(1-N) for both the traffic volume metric 112 and the capacity metric 120. In various examples, the values (e.g., values 308(1)) for the traffic volume metric 112 in earlier time bin(s) (e.g., time bin 318(1)) are indicators, and thus, are analyzed with respect to values (e.g., values 308(2), values 308(N)) for the capacity metric in later time bin(s) (e.g., time bin 318(2), 318(N)) in order to correlate 304 current changes in traffic volume to projected changes in capacity. The service-specific machine learning model 302 is trained to make projected changes in capacity based on current values 320(1) and 320(2) for the traffic volume metric 112, as retrieved and/or accessed for current time bins 322(1) and 322(2). The service-specific machine learning model 302 can be any type of predictive model. The service-specific machine learning model 302 can use any one of neural networks (e.g., convolutional neural networks, recurrent neural networks such as Long Short-Term Memory), Gated Adaptive Network for Deep Automated Learning of Features, Naive Bayes, k-nearest neighbor algorithm, majority classifier, support vector machines, random forests, boosted trees, Classification and Regression Trees (CART), and so on.

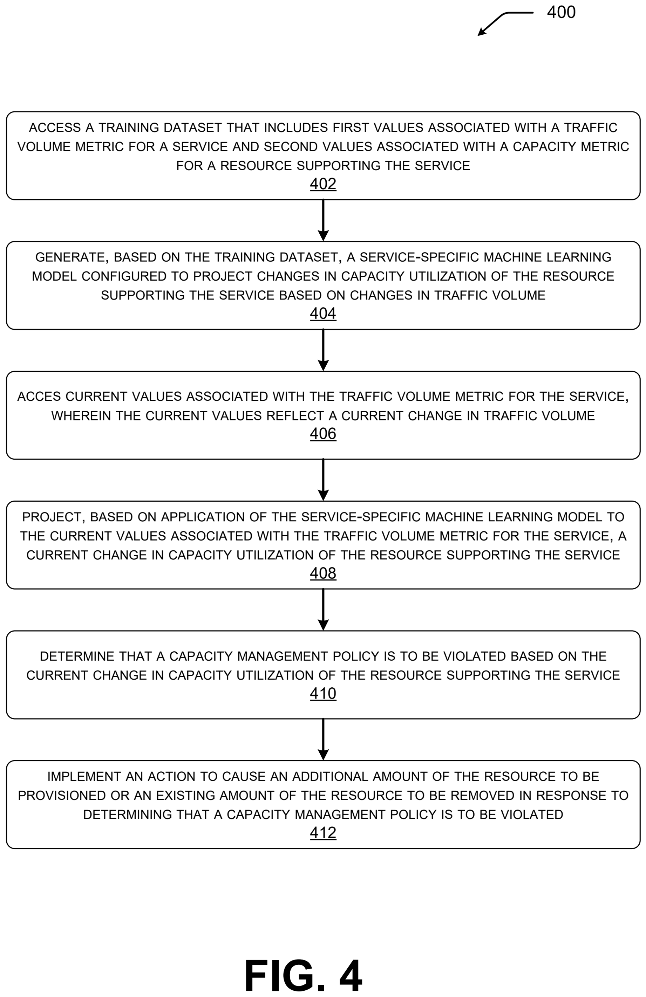

Proceeding to FIG. 4, a process 400 for using traffic volume associated with a service in order to proactively manage the capacity of a resource that supports the service is shown and described. The process 400 begins at operation 402 where a system accesses a training dataset that includes first values associated with a traffic volume metric for a service executing in a cloud computing environment and second values associated with a capacity metric for a resource supporting the service.

At operation 404, the system generates, based on the training dataset, a service-specific machine learning model configured to project changes in capacity utilization of the resource supporting the service based on changes in traffic volume.

At operation 406, the system accesses current values associated with the traffic volume metric for the service. The current values reflect a current change in traffic volume.

At operation 408, the system applies the service-specific machine learning model to the current values associated with the traffic volume metric for the service to project a current change in capacity utilization of the resource supporting the service.

At operation 410, the system determines that a capacity management policy is to be violated based on the current change in capacity utilization of the resource supporting the service.

At operation 412, the system implements an action to cause an additional amount of the resource to be provisioned or an existing amount of the resource to be removed in response to determining that a capacity management policy is to be violated. In one example, the action includes providing a notification to a tenant that operates the service. The notification indicates that the capacity management policy is to be violated based on the current change in capacity utilization of the resource supporting the service. In another example, the action includes automatically allocating the additional amount of the resource to the service. In yet another example, the action includes automatically deallocating the existing amount of the resource from the service.

For ease of understanding, the process discussed in this disclosure is delineated as separate operations represented as independent blocks. However, these separately delineated operations should not be construed as necessarily order dependent in their performance. The order in which the process is described is not intended to be construed as a limitation, and any number of the described process blocks may be combined in any order to implement the process or an alternate process. Moreover, it is also possible that one or more of the provided operations is modified or omitted.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated method can end at any time and need not be performed in its entirety. Some or all operations of the method, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the process 400 can be implemented, at least in part, by modules running the features disclosed herein can be a dynamically linked library (DLL), a statically linked library, functionality produced by an application programing interface (API), a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the process 400 may also be implemented in other ways. In addition, one or more of the operations of the process 400 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

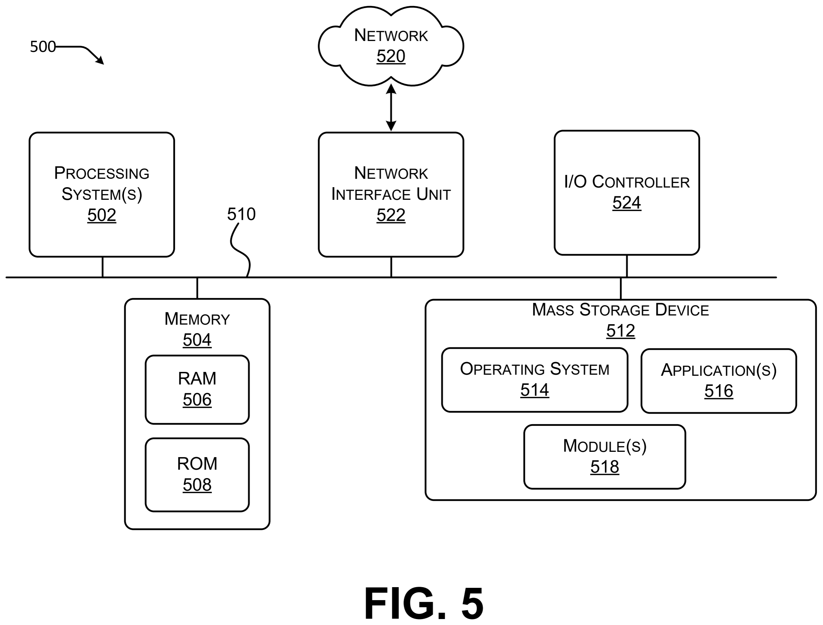

FIG. 5 shows additional details of an example computer architecture 500 for a device, such as a computer or a server configured as part of the system 100, capable of executing computer instructions (e.g., a module described herein). The computer architecture 500 illustrated in FIG. 5 includes processing system 502, a system memory 504, including a random-access memory 506 (RAM) and a read-only memory (ROM) 508, and a system bus 510 that couples the memory 504 to the processing system 502. The processing system 502 comprises processing unit(s). In various examples, the processing unit(s) of the processing system 502 are distributed. Stated another way, one processing unit of the processing system 502 may be located in a first location (e.g., a rack within a datacenter) while another processing unit of the processing system 502 is located in a second location separate from the first location. Moreover, the systems discussed herein can be provided as a distributed computing system such as a cloud service.

Processing unit(s), such as processing unit(s) of processing system 502, can represent, for example, a CPU-type processing unit, a GPU-type processing unit, a field-programmable gate array (FPGA), another class of digital signal processor (DSP), or other hardware logic components that may, in some instances, be driven by a CPU. For example, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), and the like.

A basic input/output system containing the basic routines that help to transfer information between elements within the computer architecture 500, such as during startup, is stored in the ROM 508. The computer architecture 500 further includes a mass storage device 512 for storing an operating system 514, application(s) 516, modules 518, and other data described herein.

The mass storage device 512 is connected to processing system 502 through a mass storage controller connected to the bus 510. The mass storage device 512 and its associated computer-readable media provide non-volatile storage for the computer architecture 500. Although the description of computer-readable media contained herein refers to a mass storage device, the computer-readable media can be any available computer-readable storage media or communication media that can be accessed by the computer architecture 500.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 500 may operate in a networked environment using logical connections to remote computers through the network 520. The computer architecture 500 may connect to the network 520 through a network interface unit 522 connected to the bus 510. The computer architecture 500 also may include an input/output controller 524 for receiving and processing input from a number of other devices, including a keyboard, mouse, touch, or electronic stylus or pen. Similarly, the input/output controller 524 may provide output to a display screen, a printer, or other type of output device.

The software components described herein may, when loaded into the processing system 502 and executed, transform the processing system 502 and the overall computer architecture 500 from a general-purpose computing system into a special-purpose computing system customized to facilitate the functionality presented herein. The processing system 502 may be constructed from any number of transistors or other discrete circuit elements, which may individually or collectively assume any number of states. More specifically, the processing system 502 may operate as a finite-state machine, in response to executable instructions contained within the software modules disclosed herein. These computer-executable instructions may transform the processing system 502 by specifying how the processing system 502 transition between states, thereby transforming the transistors or other discrete hardware elements constituting the processing system 502.

The disclosure presented herein also encompasses the subject matter set forth in the following clauses.

Example Clause A, a method comprising: generating, based on a training dataset, a service-specific machine learning model configured to project changes in capacity utilization of a resource supporting a service executing in a cloud computing environment based on changes in traffic volume, wherein the training dataset includes: first values associated with a traffic volume metric for the service; and second values associated with a capacity metric for the resource supporting the service; accessing current values associated with the traffic volume metric for the service, wherein the current values reflect a current change in traffic volume; projecting, based on application of the service-specific machine learning model to the current values associated with the traffic volume metric for the service, a change in capacity utilization of the resource supporting the service; determining that a capacity management policy is to be violated based on the current change in capacity utilization of the resource supporting the service; and implementing an action to automatically provision an additional amount of the resource or remove an existing amount of the resource in response to determining that a capacity management policy is to be violated.

Example Clause B, the method of Example Clause A, wherein: the capacity management policy defines an under-provisioning threshold and the determining is based on the current change in capacity utilization of the resource supporting the service indicating that the under-provisioning threshold is satisfied; and the action provisions the additional amount of the resource at a time determined by the service-specific machine learning model to increase available capacity of the resource.

Example Clause C, the method of Example Clause A, wherein: the capacity management policy defines an over-provisioning threshold and the determining is based on the current change in capacity utilization of the resource supporting the service indicating that the over-provisioning threshold is satisfied; and the action removes the existing amount of the resource at a time determined by the service-specific machine learning model to decrease available capacity of the resource.

Example Clause D, the method of any one of Example Clauses A through C, wherein the capacity management policy is defined by a tenant operating the service.

Example Clause E, the method of any one of Example Clauses A through C, wherein the capacity management policy comprises a default capacity management policy defined by an operator of the cloud computing environment based on a priority level associated with the service.

Example Clause F, the method of any one of Example Clauses A through E, wherein the traffic volume metric comprises a total number of requests received by the service per a defined time period.

Example Clause G, the method of any one of Example Clauses A through F, wherein the resource comprises one of a central processing unit-type resource, a graphical processing unit-type resource, a storage-type resource, or a networking-type resource.

Example Clause H, the method of any one of Example Clauses A through G, wherein each of the training dataset, the service-specific machine learning model, the current values, and the capacity management policy is specific to a geographic region in a plurality of geographic regions defined by the cloud computing environment.

Example Clause I, a method comprising: accessing a training dataset that includes: first values associated with a traffic volume metric for a service executing in a cloud computing environment; and second values associated with a capacity metric for a resource supporting the service; generating, based on the training dataset, a service-specific machine learning model configured to project changes in capacity utilization of the resource supporting the service based on changes in traffic volume; accessing current values associated with the traffic volume metric for the service, wherein the current values reflect a current change in traffic volume; projecting, based on application of the service-specific machine learning model to the current values associated with the traffic volume metric for the service, a current change in capacity utilization of the resource supporting the service; determining that a capacity management policy is to be violated based on the current change in capacity utilization of the resource supporting the service; and providing a notification to a tenant that operates the service, the notification indicating that the capacity management policy is to be violated based on the current change in capacity utilization of the resource supporting the service.

Example Clause J, the method of Example Clause I, wherein: the capacity management policy defines an under-provisioning threshold and the determining is based on the current change in capacity utilization of the resource supporting the service indicating that the under-provisioning threshold is satisfied; and the notification further includes a recommendation to provision an additional amount of the resource at a time determined by the service-specific machine learning model to increase available capacity of the resource.

Example Clause K, the method of Example Clause I, wherein: the capacity management policy defines an over-provisioning threshold and the determining is based on the current change in capacity utilization of the resource supporting the service indicating that the over-provisioning threshold is satisfied; and the notification further includes a recommendation to remove an existing amount of the resource at a time determined by the service-specific machine learning model to decrease available capacity of the resource.

Example Clause L, the method of any one of Example Clauses I through K, wherein the capacity management policy is defined by the tenant operating the service.

Example Clause M, the method of any one of Example Clauses I through K, wherein the capacity management policy comprises a default capacity management policy defined by an operator of the cloud computing environment based on a priority level associated with the service.

Example Clause N, the method of any one of Example Clauses I through M, wherein the traffic volume metric comprises a total number of requests received by the service per a defined time period.

Example Clause O, the method of any one of Example Clauses I through N, wherein the resource comprises one of a central processing unit-type resource, a graphical processing unit-type resource, a storage-type resource, or a networking-type resource.

Example Clause P, the method of any one of Example Clauses I through O, wherein each of the training dataset, the service-specific machine learning model, the current values, and the capacity management policy is specific to a geographic region in a plurality of geographic regions defined by the cloud computing environment.

Example Clause Q, a system comprising: a processing system; and a computer readable storage medium storing instructions that, when executed by the processing system, cause the system to perform operations comprising: accessing a training dataset that includes: first values associated with a traffic volume metric for a service executing in a cloud computing environment; and second values associated with a capacity metric for a resource supporting the service; generating, based on the training dataset, a service-specific machine learning model configured to project changes in capacity utilization of the resource supporting the service based on changes in traffic volume; accessing current values associated with the traffic volume metric for the service, wherein the current values reflect a current change in traffic volume; projecting, based on application of the service-specific machine learning model to the current values associated with the traffic volume metric for the service, a current change in capacity utilization of the resource supporting the service; determining that a capacity management policy is to be violated based on the current change in capacity utilization of the resource supporting the service; and implementing an action to cause an additional amount of the resource to be provisioned or an existing amount of the resource to be removed in response to determining that a capacity management policy is to be violated.

Example Clause R, the system of Example Clause Q, wherein the action comprises providing a notification to a tenant that operates the service, the notification indicating that the capacity management policy is to be violated based on the current change in capacity utilization of the resource supporting the service.

Example Clause S, the system of Example Clause Q, wherein the action comprises automatically allocating the additional amount of the resource to the service.

Example Clause T, the system of Example Clause Q, wherein the action comprises automatically deallocating the existing amount of the resource from the service.

Although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without author input or prompting, whether these features, elements, and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While certain example embodiments have been described, these embodiments have been presented by way of example only, and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions and changes in the form of the methods and systems described herein may be made without departing from the scope of the inventions disclosed herein. The accompanying claims and their equivalents are intended to cover such forms or modifications as would fall within the scope of certain of the inventions disclosed herein.

It should be appreciated any reference to "first," "second," etc. items and/or abstract concepts within the description is not intended to and should not be construed to necessarily correspond to any reference of "first," "second," etc. elements of the claims. In particular, within this Summary and/or the following Detailed Description, items and/or abstract concepts such as, for example, individual computing devices and/or operational states of the computing cluster may be distinguished by numerical designations without such designations corresponding to the claims or even other paragraphs of the Summary and/or Detailed Description.

In closing, although the various techniques have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method comprising:
generating (404), based on a training dataset, a service-specific machine learning model (108) configured to project changes in capacity utilization (122) of a resource (106) supporting a service (102) executing in a cloud computing environment (104) based on changes in traffic volume (124), wherein the training dataset includes:
first values (116) associated with a traffic volume metric (112) for the service; and
second values (118) associated with a capacity metric (120) for the resource supporting the service;
accessing (406) current values (126) associated with the traffic volume metric for the service, wherein the current values reflect a current change in traffic volume (128);
projecting (408), based on application of the service-specific machine learning model to the current values associated with the traffic volume metric for the service, a change in capacity utilization (130) of the resource supporting the service;
determining (410) that a capacity management policy (132) is to be violated based on the current change in capacity utilization of the resource supporting the service; and
implementing an action (138) to automatically provision an additional amount of the resource or remove an existing amount of the resource in response to determining that a capacity management policy is to be violated.

2. The method of claim 1, wherein:
the capacity management policy defines an under-provisioning threshold and the determining is based on the current change in capacity utilization of the resource supporting the service indicating that the under-provisioning threshold is satisfied; and
the action provisions the additional amount of the resource at a time determined by the service-specific machine learning model to increase available capacity of the resource.

3. The method of claim 1, wherein:
the capacity management policy defines an over-provisioning threshold and the determining is based on the current change in capacity utilization of the resource supporting the service indicating that the over-provisioning threshold is satisfied; and
the action removes the existing amount of the resource at a time determined by the service-specific machine learning model to decrease available capacity of the resource.

4. The method of any one of the preceding claims, wherein the capacity management policy is defined by a tenant operating the service.

5. The method of any one of the preceding claims, wherein the capacity management policy comprises a default capacity management policy defined by an operator of the cloud computing environment based on a priority level associated with the service.

6. The method of any one of the preceding claims, wherein the traffic volume metric comprises a total number of requests received by the service per a defined time period.

7. The method of any one of the preceding claims, wherein the resource comprises one of a central processing unit-type resource, a graphical processing unit-type resource, a storage-type resource, or a networking-type resource.

8. The method of any one of the preceding claims, wherein each of the training dataset, the service-specific machine learning model, the current values, and the capacity management policy is specific to a geographic region in a plurality of geographic regions defined by the cloud computing environment.

9. A method comprising:
accessing (402) a training dataset that includes:
first values (116) associated with a traffic volume metric (112) for a service (102) executing in a cloud computing environment (104); and
second values (118) associated with a capacity metric (120) for a resource (106) supporting the service;
generating (404), based on the training dataset, a service-specific machine learning model (108) configured to project changes in capacity utilization (122) of the resource supporting the service based on changes in traffic volume (124);
accessing (406) current values (126) associated with the traffic volume metric for the service, wherein the current values reflect a current change in traffic volume (128);
projecting (408), based on application of the service-specific machine learning model to the current values associated with the traffic volume metric for the service, a current change in capacity utilization (130) of the resource supporting the service;
determining (410) that a capacity management policy (132) is to be violated based on the current change in capacity utilization of the resource supporting the service; and
providing a notification (134) to a tenant (136) that operates the service, the notification indicating that the capacity management policy is to be violated based on the current change in capacity utilization of the resource supporting the service.

10. The method of claim 9, wherein:
the capacity management policy defines an under-provisioning threshold and the determining is based on the current change in capacity utilization of the resource supporting the service indicating that the under-provisioning threshold is satisfied; and
the notification further includes a recommendation to provision an additional amount of the resource at a time determined by the service-specific machine learning model to increase available capacity of the resource.

11. The method of claim 9, wherein:
the capacity management policy defines an over-provisioning threshold and the determining is based on the current change in capacity utilization of the resource supporting the service indicating that the over-provisioning threshold is satisfied; and
the notification further includes a recommendation to remove an existing amount of the resource at a time determined by the service-specific machine learning model to decrease available capacity of the resource.

12. A system comprising:
a processing system; and
a computer readable storage medium storing instructions that, when executed by the processing system, cause the system to perform operations comprising:
accessing (402) a training dataset that includes:
first values (116) associated with a traffic volume metric (112) for a service (102) executing in a cloud computing environment (104); and
second values (118) associated with a capacity metric (120) for a resource (106) supporting the service;
generating (404), based on the training dataset, a service-specific machine learning model (108) configured to project changes in capacity utilization (122) of the resource supporting the service based on changes in traffic volume (124);
accessing (406) current values (126) associated with the traffic volume metric for the service, wherein the current values reflect a current change in traffic volume (128);
projecting (408), based on application of the service-specific machine learning model to the current values associated with the traffic volume metric for the service, a current change in capacity utilization (130) of the resource supporting the service;
determining (410) that a capacity management policy (132) is to be violated based on the current change in capacity utilization of the resource supporting the service; and
implementing an action (134, 138) to cause an additional amount of the resource to be provisioned or an existing amount of the resource to be removed in response to determining that a capacity management policy is to be violated.

13. The system of claim 12, wherein the action comprises providing a notification to a tenant that operates the service, the notification indicating that the capacity management policy is to be violated based on the current change in capacity utilization of the resource supporting the service.

14. The system of claim 12 or claim 13, wherein the action comprises automatically allocating the additional amount of the resource to the service.

15. The system of any one of claims 12 to 14, wherein the action comprises automatically deallocating the existing amount of the resource from the service.
